# EUROPEAN PATENT APPLICATION

(11) **EP 3 661 149 A1**
(43) Date of publication of application: **03.06.2020**
(21) Application number: 18209093.6
(22) Date of filing: 29.11.2018
(51) Int. Cl.: H04L 29/06, G06F 11/36, G06F 21/56, G06F 21/55

(54) **TEST SYSTEM AND METHOD FOR DATA ANALYTICS**

(71) Applicant: Siemens Aktiengesellschaft, 80333 München (DE)
(72) Inventor: Cramer, Dieter, 81543 München (DE); Fiege, Ludger, 85567 Grafing (DE); Fröhlich, Joachim, 85614 Kirchseeon (DE); Rothbauer, Stefan, 86156 Augsburg (DE); Stückjürgen, Christoph, 80807 München (DE)

(57) **Abstract**

The invention refers to a test system (100) for data analytics for an integrated system and/or embedded system comprising one or more system function-components (200), in which input sensors (230) are configured to receive input data (220), one or more output sensors (250) are configured to transmit output data (240) generated by the system function-component (200) based on the input data (220), one or more internal data sensors (260) for processing internal data (260), one or more function sensors (290) for processing a system function code (280), and a test probe module (300) configured for transmitting test data (310) to the sensors (230, 250, 270, 290) and receiving processed data (330, 350, 370, 390) based on the test data (310) from the sensors (230, 250, 270, 290), an intrusion detection module (400) configured for receiving the processed data (330, 350, 370, 390) from the test probe module (300) and testing the data (330, 350, 370, 390) by using a testing algorithm (TA).

## Description

The present invention generally relates to a test system for data analytics for an integrated system and/or embedded system comprising one or more system function-components, in which input sensors are configured to receive input data and one or more output sensors are configured to transmit output data generated by the system function-component based on the input data.

It is common knowledge that a cyber-physical system is constructed out of several components. Especially, in systems based on cloud computing technology, a large number of devices is connected to a cloud computing system via the Internet. The devices may be located in a remote facility connected to the cloud computing system. For example, the devices can comprise, or consist of, equipments, sensors, actuators, robots, and/or machinery in an industrial setup(s). The devices can be medical devices and equipments in a healthcare unit. The devices can be home appliances or office appliances in a residential/commercial establishment.

The cloud computing system may enable remote configuring, monitoring, controlling, and maintaining connected devices (also commonly known as 'assets'). Also, the cloud computing system may facilitate storing large amounts of data periodically gathered from the devices, analyzing the large amounts of data, and providing insights (e.g., key performance indicators, outliners) and alerts to operators, field engineers or owners of the devices via a graphical user interface (e.g., of web applications). The insights and alerts may enable controlling and maintaining the devices, leading to efficient and fail-safe operation of the devices. The cloud computing system may also enable modifying parameters associated with the devices and issues control commands via the graphical user interface based on the insights and alerts.

Furthermore, in the field of testing, there exist various approaches to check outputs at system level (black box system tests) or components level (grey box integration test). State-of-the-art test approaches (black or grey box) check system properties, but they cannot prevent an error from propagating in the system as tests monitor system behavior which has already happened. These tests can report violations of system conditions, though cannot prevent violations from happening.

All usual approaches for testing conditions on system state and behaviour monitor an execution of a system and check it against predefined constraints. In all cases, the unintended behaviour has already happened. Unintended behaviour cannot be prevented and any adverse effects in respect to the environment of a system may have already happened. Such test approaches support the development of a system, but they are of limited use for productive systems that shall independently operate for a long time in the field.

Furthermore, there it is important to detect malicious activities of third parties such as hacking attacks that leads to altering of the functional behavior of a cyber-physical system. An example of such types of attacks is the virus Stux-net which is described at:
https://de.wikipedia.org/wiki/Stuxnet.

The problem of detecting malicious activity on processing computer systems can be solved by using Intrusion Detection Systems (IDS). IDS types range in scope from single computers to large cyber-physical networks. The most common classifications are network intrusion detection systems (NIDS) and host-based intrusion detection systems (HIDS). A system that monitors important operating system files is an example of an HIDS, while a system that analyzes incoming network traffic is an example of a NIDS.
It is also possible to classify IDS by the detection approach: the most well-known variants are signature-based detection which recognizes bad patterns, such as malware; and anomaly-based detection which detects deviations from a model of "good" behavior, which often relies on machine learning. It requires a model of the definition of a "good" system behavior.
Some IDS products have the ability to respond to detected intrusions. Systems with response capabilities are typically referred to as an intrusion prevention system.

However, host-based intrusion detection systems for anomaly detection are only analysing the operation level of an integrated system so that malicious activities on a deeper level of the integrated system cannot be detected.

In view of the foregoing it is thus an object of the present invention to provide techniques that assist in testing an integrated system and detecting malicious activities before affecting the whole integrated system behavior.

According to a first aspect, the invention provides a test system for data analytics for an integrated system and/or embedded system comprising one or more system function-components, in which input sensors are configured to receive input data, one or more output sensors are configured to transmit output data generated by the system function-component based on the input data, one or more internal data sensors for processing internal data, one or more function sensors for processing a system function code, and a test probe module configured for transmitting test data to the sensors and receiving processed data from the sensors based on the test data, an intrusion detection module configured for receiving the processed data from the test probe module and testing the data by using a testing algorithm. Therefore, the present invention comprises a test system and an approach to detect integrity properties on system data as states, signals, communication at system runtime. Thus, the system behaviour of the integrated system is enforced to remain within expected constraints and no further test efforts need to be spent to validate that the conditions are met. Repetitious test efforts are reduced applying the test approach according to the present invention in integrated systems that shall be safeguarded against violating aforementioned conditions like safety goals, system and software correctness conditions, and system conditions in general.

In a preferred embodiment, the sensors are configured to use one or more processing algorithms.

Preferably, the intrusion detection test module is configured to test the output data of further system function-components.

In a further embodiment, the testing algorithm is configured to be stored at the intrusion detection test module and/or in a cloud computing platform.

Furthermore, several function-components are connected in an integrated network system.

According to a second aspect, the invention provides a method for data analytics for an integrated system and/or embedded system comprising one or more system function-components, comprising:
- Receiving input data by one or more input sensors of the system function-component;
- Generating output data based on the input data by the system function-component;
- Transmitting test data from a test probe module to one or more input sensors and/or one or more output sensors and/or one or more internal data sensors and/or function sensors for a system function code;

- Processing the test data by the sensors and generating processed data;
- Sending the processed data from one or more of the sensors to the test probe module;
- Transmitting the processed data from the test probe module to the intrusion detection test module;
- Testing the processed data in the intrusion detection test module by using a testing algorithm.

In a preferred embodiment, the sensors are using one or more processing algorithms.

Preferably, the intrusion detection test module is testing the output data of further system function-components.

In a further embodiment, the testing algorithm is stored at the intrusion detection test module and/or in a cloud computing platform.

Furthermore, several function-components are connected in an integrated network system.

According to a third aspect, the invention provides a cloud computing platform configured for use in the system according the first aspect of the invention.

According to a fourth aspect, the invention provides a computer program product comprising executable program code configured to, when executed, perform the method according to the second aspect.

Additional features, aspects and advantages of the invention or of its embodiments will become apparent on reading the detailed description in conjunction with the following figures:
- Fig. 1: provides a general overview of a test system for data analytics of an integrated system according to an embodiment of the first aspect of the invention;
- Fig. 2: provides a schematic flow diagram illustrating an embodiment of a method according to the second aspect of the present invention;
- Fig. 3: schematically illustrates a computer program product according to an embodiment of the fourth aspect of the invention.

In the following description, for purposes of explanation and not limitation, specific details are set forth in order to provide a thorough understanding of the present invention. It will be apparent to one skilled in the art that the present invention may be practiced in other implementations that depart from these specific details.

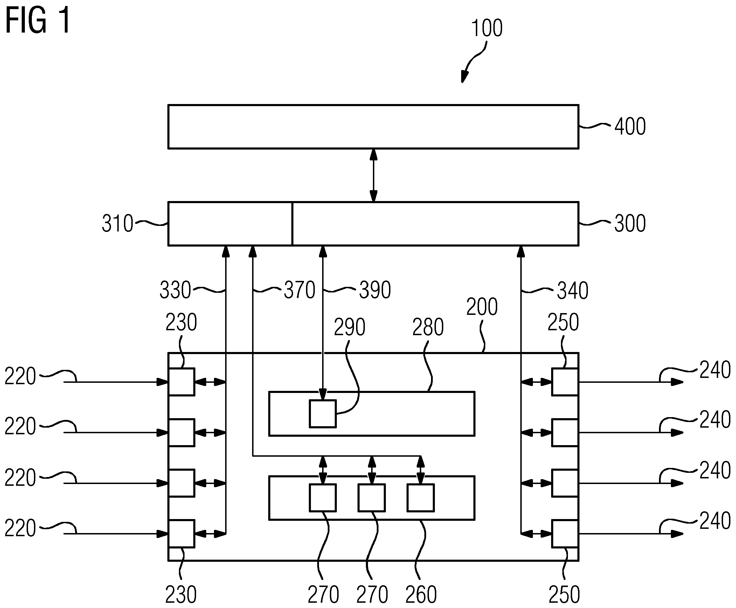

Fig. 1 provides a general overview of a test system 100 for data analytics of an integrated system according to an embodiment of the first aspect of the invention.

The integrated system comprises at least one system function-component 200 which can be defined as a component receiving input data 220, computing the input data 220 and transmitting output data 240 based on the input data 220. Furthermore, the system function-component 200 comprises internal function data 260 and a system function code 280.
Input data 220 is data received by the system function-component 200 and can be generated by a physical interface like a bus system, analog or digital input/output (I/O) operations, and/or other system function-components 200 of the whole integrated system using a software interface.

Output data 240 is data transmitted by the system function-component 200 to a physical interface like a bus system, analog or digital input output operations, and/or other system function-components 200 using a software interface.

A system function code 280 comprises an algorithm (PA) for processing and performing and the computational logic of the system function-component 200.

Internal data 260 is data required by the system function code 280 for performing the computational logic of the system function code 280 and comprises temporal and persistent data.

The system function-component 200 comprises one or more input sensors 230 for receiving the input data 220 and one or more output sensors 250 for transmitting the output data 240. The internal data 260 are generated and/or stored at internal data sensors 270. The system function code 280 comprises function sensors 290 for receiving, processing and transmitting data. A test probe module 300 is connected with the input sensors 230, the output sensors 250, the internal data sensors 270 and the function sensors 290 and data are transferred between the sensors 230, 250, 270 and 290 and the test prove module 300. The sensors 230, 250, 270 and 290 can be integrated into the system function-component 200 during the production of the system function-component 200. However, it is also possible to upgrade an already running integrated system with additional sensors 230, 250, 270 and 290. Furthermore, the test system 100 comprises a host-based intrusion detection test module 220 for an anomaly-based detection of malicious activities.

The test probe module 300 can receive data from the sensors 230, 250, 270 and 290 and can transmit data to the sensors 230, 250, 270 and 290. The sensors 230, 250, 270 and 290 are configured to monitor and process the transmitted data from the test probe module 300. They can use for the processing additional data such as input data 220, output data 240, internal data 260 and the system function code 280.

The sensors 230, 250, 270 and 290 are also configured to monitor and process the transmitted data from the test probe module 300 by comparing them with received data values from additional memory cells and/or pre-processing units (not shown) for performing a cyclic redundancy check (CRC). CRC is an error-detecting algorithm commonly used in digital networks and storage devices to detect changes to raw data. Data received by the sensors 230, 250, 270 and 290 may be attached with a short check value which can be based on the remainder of a polynomial division.

The test probe module 300 receives data 330, 350, 370 and 390 monitored and processed by the sensors 230, 250, 270 and 290. The test probe module 300 can be configured as a software library linked with the system function-component 200 or as an external module connected to the system function-component 200 by using a network communication protocol.

The intrusion detection test module 400 is connected with the test probe module 300 and controls during the operation of the system function-component 200 the data received from the test probe module 300. The intrusion detection test module 400 performs a black box functional test by comparing the received output data 240 with the expected output data for specific input data 220 and detects malicious activities and/or system failures if the values do not fit. Furthermore, it performs a grey box functional test by checking invariants or conditions which are always expected to hold true for the system function-component 200 based on specific input data 220, internal data 260 and output data 240 and/or other processed data 330, 350, 370, 390. Furthermore, it performs a grey box fault injection test by checking if the values of the input data 220 or internal data 260 correspond to the expected values by checking memory and CPU usage of the system function-component 200 and by checking if the system function code 280 has not been modified.

The intrusion detection test module 400 can also be configured to compare internal data 260 against pre-defined internal function data by a trusted entity of the same system function-component 200 running in a standby configuration (not shown).

The intrusion detection test module 400 may be assigned to the CPU, network and memory resources of the integrated system. These processing units are always protected, regardless of whether the intrusion detection module 400 is operating or not. Therefore, the operation of the intrusion detection test module 400 cannot be influenced by side effects of these processing units. The behaviour of the system function-component 200 is identical regardless of whether an intrusion detection test module 400 is operating not. Therefore, the intrusion detection test module 400 according to the present invention can be applied to control integrated systems which require a highly deterministic operation of its system function-components 200.

According to the present invention, a more efficient detection of malicious activity and failures of an integrated system can be achieved. Testing of system function-components 200 during the operation of the integrated system allows detection of malicious activity and/or failures in a more accurate way than a heuristic approach based on operating system level analyses as known in the state of the art. The number of false detections as well as the number of non-detected malicious activities and/or failures can be reduced. Furthermore, the present invention can be applied to integrated systems that require a deterministic system behavior. The idea is to continuously test system function-components during operation. Malicious activity and/or failures are detected by using failing tests which are specifically created to check the behaviour of a system function-component. Especially, the present invention can be applied to integrated systems with limited processing resources such as integrated systems without an operating system.

By the present invention it is possible to monitor integrated system operating in the field. Such monitoring is normally only performed in the development phase of a component and/or an integrated system and not during the lifetime of an integrated system.

The present invention operates on the level of system function-components 200. The test probe module 300 provides access to input data, output data 240 and internal data 260 of the system function-component 200. This enables a precise and accurate detection of the integrated system as a detection in respect of the correct behavior of the integrated system is performed at a deeper level of the integrated system.

The test probe module 300 can also be used also for embedded entities with limited resources. The resource usage (memory, CPU) of the test probe module 300 is defined by the number of data sensors 230, 250, 270, 290.

Therefore, the security of an integrated system can be increased as the present invention detects attacks that would otherwise have been overlooked.

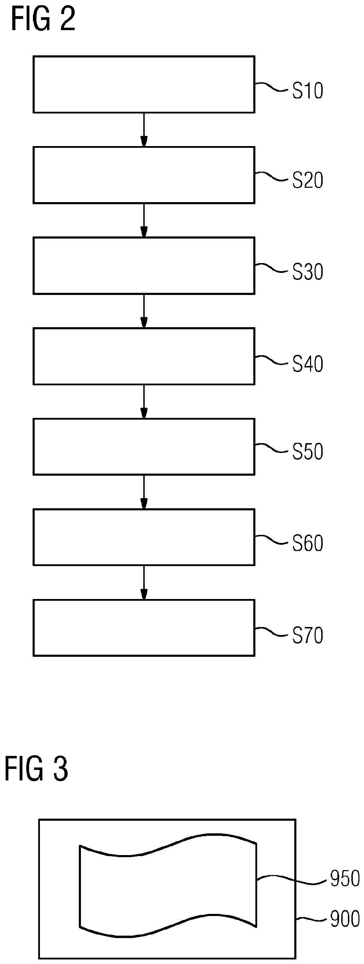

Fig. 2 shows a schematic flow diagram illustrating a method according to an embodiment of the second aspect of the present invention. The method of Fig. 2 will be described partially using reference signs of Fig. 1, although the method of Fig. 2 is not restricted to the embodiments described in Fig. 1. On the other hand, the method of Fig. 2 may be executed using any of the embodiments described with respect to Fig. 1, and may accordingly, be adapted and modified according to any variations and modifications described above.

The flow of processing data comprises the following steps:
In a step S10, input data 220 are received by one or more input sensors 230 of the system function-component 200.

In a step S20 output data 240 are generated based on the input data 220 by the system function-component 200.

In a step S30 test data 310 from the test probe module 300 are transmitted to the input sensors 230 and/or the output sensors 250 and/or the internal data sensors 270 and/or the function sensors 290.

In a step S40 the test data 310 are processed by the input sensors 230 and/or the output sensors 250 and/or the internal data sensors 270 and/or the function sensors 290 by using a processing algorithm (PA).

In a step S50 the processed data 330, 350, 370, 390 are sent from the sensors 230, 250, 270, 290 to the test probe module 300.

In a step S60 the test probe module 300 transmits the processed data 330, 350, 370, 390 to the intrusion detection test module 400.

In a step S70 the processed data 330, 350, 370, 390 are tested in the intrusion detection test module 400 by using a testing algorithm (TA).

If the test succeeds, the operation of the system function-component 200 can continue. If the test of the intrusion detection test module 400 fails, the operation of the system function-component 200 can be stopped.

The intrusion detection test module 400 provides a testing algorithm (TA) to the processed data 330, 350, 370, 390 against specified conditions to detect if all test conditions are hold as expected. Such a testing algorithm (TA) can be stored at the intrusion detection test module 400 and/or in a computing cloud platform.

According to the state of the art, all practical testing and verification approaches operate offline. However, the tests based on the detection system 100 for processing verified data according of this invention are tests of productive systems. The tests may operate online in running field systems and enable an early detection of faults in real system data such as state data, signal data, communication data and prevent errors that, in the worst case, can lead to the whole system failure. Conceived test cases can never cover all realistic situations in complex, realistic systems so that by the test approach according to the present invention the safety state of a system can be increased dramatically.

In contrast to homogeneous redundancy as known in the state of the art, with the approach according to the present invention operating resources and development efforts are not duplicated. The test conditions are evaluated in addition to the execution of the system function-component 200. The test evaluation checks the output data 240 of the system function-components 200 for plausibility.

The error checking and detection mechanism according to this invention is conducted by the intrusion detection test module 400 as a generic, separate mechanism which is not necessarily part of specific components, but part of the base (runtime) system. It can be applied to selected system function-components 200, e.g. which are critical for the overall integrated system. Especially, the tested system function-components 200 do not need to be modified. Thus, system engineering may concentrate on the functionality of the whole integrated system 200. Concerns regarding system goals such as safety requirements are separated because testing and handling of non-functional properties are outsourced to the dedicated intrusion detection test module 400, providing test services to the integrated system. By a separated test system 100, test system function-components 200 can be validated separately and independently. Such an independent, modular and separate validation is typically an important argument in safety cases.

The present invention comprises a test system and an approach to detect integrity properties on system data as states, signals, communication at system runtime. Thus, the system behaviour of the integrated system is detected to remain within expected constraints and no further test efforts may not be needed to validate that the conditions are met. Repetitious test efforts can be reduced applying the test approach according to the present invention in integrated systems that shall be safeguarded against violating aforementioned conditions like safety goals, system and software correctness conditions, and system conditions in general.

This invention can be used to make test systems 100 more robust and reliable. Safety conditions can be checked before failures occur. In particular, the additive extension proposed here allow for integrating it into existing integrated systems. Therefore, this invention can help integrating system function-components 200 from different internal/external component suppliers.

This invention can reduce costs for testing because it runs tests during normal operation, and these tests can be added to existing, unchanged component.

Addressing system data such as states, signals, communication on system level simplifies the definition of system tests that catch and prevent failures of system modules or failures of the whole integrated system. With this invention, continuous checking of system constraints gets easier, preventing the late detection of errors, which are always costly to detect and to repair.

Fig. 3 schematically illustrates a computer program product 500 comprising executable program code 550 configured to, when executed, perform the method according to the second aspect of the present invention, in particular as has been described with respect to Fig. 1 to Fig. 2.

## Claims

1. A test system (100) for data analytics for an integrated system and/or embedded system comprising one or more system function-components (200), in which input sensors (230) are configured to receive input data (220), one or more output sensors (250) are configured to transmit output data (240) generated by the system function-component (200) based on the input data (220), one or more internal data sensors (260) for processing internal data (260), one or more function sensors (290) for processing a system function code (280), and a test probe module (300) configured for transmitting test data (310) to the sensors (230, 250, 270, 290) and receiving processed data (330, 350, 370, 390) from the sensors (230, 250, 270, 290) based on the test data (310), an intrusion detection module (400) configured for receiving the processed data (330, 350, 370, 390) from the test probe module (300) and testing the data (330, 350, 370, 390) by using a testing algorithm (TA).

2. The test system (100) as claimed in claim 1, wherein the sensors (230, 250, 270, 290) are configured to use one or more processing algorithms (PA).

3. The test system (100) as claimed in claim 1 or claim 2, wherein the intrusion detection test module (400) is configured to test the output data (240) of further system function-components (200).

4. The test system (100) as claimed in any one of claims 1 to 3, wherein the testing algorithm (A) is configured to be stored at the intrusion detection test module (400) and/or in a cloud computing platform.

5. The system as claimed in any one of claims 1 to 4, wherein several function-components (200) are connected in an integrated network system.

6. A method for data analytics for an integrated system and/or embedded system comprising one or more system function-components (200), comprising:
- Receiving input data (220) (S10) by one or more input sensors (230) of the system function-component;
- Generating output data (250) (S20) based on the input data (230) by the system function-component (200);
- Transmitting test data (310) (S30) from a test probe module (300) to one or more input sensors (230) and/or one or more output sensors (250) and/or one or more internal data sensors (270) and/or function sensors (290) for a system function code (280);
- Processing the test data (310) (S40) by the sensors (230, 250, 270, 290) and generating processed data (330, 350, 370, 390);
- Sending the processed data (330, 350, 370, 390) (S50) from one or more of the sensors (230, 250, 270, 290) to the test probe module (300);
- Transmitting the processed data (330, 350, 370, 390) (S60) from the test probe module (300) to the intrusion detection test module (400);
- Testing the processed data (330, 350, 370, 390) (S70) in the intrusion detection test module (400) by using a testing algorithm (TA).

7. The method as claimed in claim 6, wherein the sensors (230, 250, 270, 290) are using one or more processing algorithms (PA).

8. The method as claimed in claim 6 or claim 7, wherein the intrusion detection test module (400) is testing the output data (240) of further system function-components (200) .

9. The method as claimed in any one of claims 6 to 8, wherein the testing algorithm (A) is stored at the intrusion detection test module (400) and/or in a cloud computing platform.

10. The method as claimed in any one of claims 6 to 9, wherein several function-components (200) are connected in an integrated network system.

11. A cloud computing platform configured for use in the system as claimed in any one of claims 1 to 5.

12. A computer program product (900) comprising executable program code (950) configured to, when executed, perform the method according to claims 6 to 10.
